# EUROPÄISCHE PATENTANMELDUNG

(11) **EP 3 258 133 A1**
(43) Veröffentlichungstag der Anmeldung: **20.12.2017**
(21) Anmeldenummer: 16174738.1
(22) Anmeldetag: 16.06.2016
(51) Int. Cl.: F16H 1/28, F16H 1/46, F16H 57/029, F16H 57/033

(54) **PLANETENGETRIEBEMODUL**

(71) Anmelder: Siemens Aktiengesellschaft, 80333 München (DE)
(72) Erfinder: Bauer, Björn, 45289 Essen (DE)

(57) **Zusammenfassung**

Die Erfindung betrifft ein Planetengetriebemodul (11, 12, 13) und ein modular aufgebautes mehrstufiges Planetengetriebe (10). Das Planetengetriebemodul (11, 12, 13) dient zum Einsatz als Getriebestufe in einem modular aufgebauten mehrstufigen Planetengetriebe (10). Das Planetengetriebemodul (11, 12, 13) weist ein Gehäuse (3) auf, in dem ein Hohlrad (6), ein Sonnenrad (4), ein Planetenträger (7) und mindestens ein in dem Planetenträger (7) drehbar gelagertes, mit dem Hohlrad (6) und dem Sonnenrad (4) kämmendes Planetenrad (5) angeordnet sind. Dabei ist das Planetengetriebemodul (11, 12, 13) öldicht abgedichtet.

## Beschreibung

Die vorliegende Erfindung betrifft ein Planetengetriebemodul und ein modular aufgebautes mehrstufiges Planetengetriebe.

Aus mehreren Planetengetriebemodulen zusammengesetzte Planetengetriebe zur Verringerung der Bauteilevielfalt und Vereinfachung der Lagerhaltung sind bekannt, siehe z.B. DD45514B (Herbert Brandt) 05.11.1966.

Aufgabe der vorliegenden Erfindung ist es, ein verbessertes Planetengetriebemodul zu schaffen sowie ein daraus zusammengesetztes Planetengetriebe.

Diese Aufgabe wird erfindungsgemäß durch ein Planetengetriebemodul nach Anspruch 1 sowie ein modular aufgebautes mehrstufiges Planetengetriebe nach Anspruch 4 gelöst.

Das erfindungsgemäße Planetengetriebemodul dient zum Einsatz als Getriebestufe in einem modular aufgebauten mehrstufigen Planetengetriebe. Das Planetengetriebemodul weist ein Gehäuse auf, in dem ein Hohlrad, ein Sonnenrad, ein Planetenträger und mindestens ein in dem Planetenträger drehbar gelagertes, mit dem Hohlrad und dem Sonnenrad kämmendes Planetenrad angeordnet sind. Dabei ist das Planetengetriebemodul öldicht abgedichtet.

Ein erfindungsgemäß modular aufgebautes mehrstufiges Planetengetriebe zeichnet sich dadurch aus, dass es zwei oder mehr erfindungsgemäße Planetengetriebemodule aufweist.

Der konstruktive Aufbau des Planetengetriebes wird gemäß der vorliegenden Erfindung scharf in seine Baugruppen getrennt. Die durch diese Trennung gebildeten Baugruppen werden als Planetengetriebemodule bezeichnet. Die Planetengetriebemodule werden als abgeschlossene Baugruppen ausgeführt, die die Getriebefunktionen "Drehzahl und Drehmoment je Stufe wandeln", "Kräfte abstützen" und "Dichtheit gewährleisten" unabhängig von den anderen Modulen erfüllen. Zumindest die Funktion "Dichtheit gewährleisten" wurde bei bisherigen modularen Planetengetrieben erst nach einer Komplettmontage des Getriebes erfüllt.

Der Erfindung liegt die Erkenntnis zugrunde, dass es große Vorteile bringt, die einzelnen Planetengetriebemodule als geschlossene und öldicht abgedichtete, in sich funktionsfähige Module auszuführen.

Dadurch können die einzelnen Planetengetriebemodule auftragsunabhängig komplett vormontiert, mit Öl befüllt und eingelagert werden; es ist somit die Bevorratung von kompletten Getriebemodulen möglich. Die Gesamtmontage eines Planetengetriebes umfasst lediglich das Verbinden der einzelnen Planetengetriebemodule, die dann das Gesamt-Planetengetriebe bilden und die übergeordnete Funktion "Bereitstellen der vom Kunden gewünschten Übersetzung" erfüllen. Die Schnittstellen zwischen den Planetengetriebemodulen sind hierbei standardisiert, so dass jede Getriebevorstufe mit jeder zugehörigen Planetenhauptstufe kombiniert werden kann. Die Schnittstellen zwischen den einzelnen Planetengetriebemodulen bilden die Eingangswelle und die Ausgangswelle eines jeden Planetengetriebemoduls. Durch die auftragsunabhängige Vormontage der module und die relativ schnelle Montage ist eine Verkürzung der Lieferzeit des Gesamtgetriebes möglich.

Ein weiterer Vorteil, der sich mit einem öldicht abgedichteten Planetengetriebemodul ergibt ist die Reduzierung der Ölmenge, die bei einem Getriebeschaden und im Servicefall vom Planetengetriebe abgelassen und nach einer Reparatur wieder in das Planetengetriebe eingefüllt werden muss. Während bisher verwendete Planetengetriebemodule an den Stirnseiten zu benachbarten Planetengetriebemodulen nicht öldicht abgedichtet sind, so dass sich im Planetengetriebe ein großer, sämtliche Planetengetriebemodule umfassender Ölraum ausbildet, ist bei der vorliegenden Erfindung das Planetengetriebe in mehrere in sich geschlossene Ölräume unterteilt. Das ergibt sich dadurch, dass jedes Planetengetriebemodul öldicht abgeschlossen ist.

Muss für die Reparatur eines erfindungsgemäßen Planetengetriebes Öl abgelassen werden, so beschränkt sich die abzulassende Ölmenge auf die in dem oder den betroffenen Planetengetriebemodulen enthaltene Ölmenge. Dadurch ist die Ölmenge erheblich vermindert gegenüber herkömmlichen modularen Planetengetrieben, bei denen aufgrund des sich durch mehrere, in der Regel alle Module erstreckenden Ölraums in der Regel das gesamte Öl abgelassen werden muss.

Muss ein einzelnes Planetengetriebemodul ausgetauscht werden, so muss nicht das Öl aus dem Modul oder dem gesamten Getriebe abgelassen werden, sondern das auszutauschende Modul kann von den benachbarten Modulen abmontiert und ausgetauscht werden, ohne das Öl abzulassen. Das ist dadurch möglich, weil jedes Modul für sich öldicht abgeschlossen ist. Dadurch ist der Aufwand erheblich vermindert gegenüber herkömmlichen modularen Planetengetrieben, bei denen aufgrund des sich durch mehrere, in der Regel alle Module erstreckenden Ölraums in der Regel das gesamte Öl aus dem Planetengetriebe abgelassen werden muss, bevor ein einzelnes Modul ausgetauscht werden kann. In Kombination mit einem passenden Servicekonzept kann die defekte Getriebestufe direkt durch eine neue ersetzt werden; der Getriebebetreiber kann somit seine Anlage sehr schnell wieder in Betrieb nehmen.

Insbesondere bei einer Vertikalaufstellung sind große Ölmengen zur Getriebeschmierung notwendig. Dies führt bei herkömmlichen Planetengetrieben zu hohen Kosten, die dem Getriebebetreiber bei Erstbefüllung und jedem weiteren Ölwechsel entstehen. Bei dem erfindungsgemäßen Planetengetriebe sind diese Kosten durch die Öldichtheit jedes Moduls erheblich geringer. Außerdem führen die öldichten Module dazu, dass die Gesamtölmenge im Getriebe, insbesondere bei einer Vertikalaufstellung, verringert wird, da nicht der gesamte Getrieberaum mit Öl befüllt werden muss, sondern lediglich die zur Schmierung der Verzahnungen und Lager je Stufe notwendige Menge an Öl benötigt wird. Dadurch wiederum wird eine Verbesserung des thermischen Verhaltens erreicht, da Planschverlustleistungen reduziert werden, insbesondere bei schnelllaufenden Getriebestufen.

Ein weiterer Vorteil von erfindungsgemäß öldicht abgeschlossenen Planetengetriebemodulen ist, dass in das Öl gelangende Metallpartikel, die z.B. durch Verschleiß oder andere Schäden entstehen, nicht unkontrolliert in dem gesamten Planetengetriebe verteilt werden, sondern auf den Ölraum des betroffenen Moduls begrenzt bleiben. Ein Schaden in einem Modul kann somit nicht zu einem Folgeschaden in einem anderen Modul führen.

Ähnliche Vorteile ergeben sich hinsichtlich der Ölalterung: in schnelldrehenden Getriebeabschnitten entstehen durch die Reibung höhere Temperaturen als in langsamdrehenden Getriebeabschnitten; während bei herkömmlichen Planetengetriebe das in den schnelldrehenden und heißeren Getriebeabschnitten schneller gealterte Öl durch den durchgehenden Ölraum über das gesamte Planetengetriebe verteilt werden, bleibt bei der vorliegenden Erfindung das schneller gealterte Öl auf die entsprechenden Module begrenzt. Für jedes Modul kann also ein seiner Ölalterungsrate entsprechendes, individuelles Ölwechselintervall festgelegt werden; auf diese Weise werden Aufwand und Kosten für Ölwechsel aufgrund von Ölalterung vermindert.

Vorteilhafte Ausgestaltungen und Weiterbildungen der Erfindung sind in den abhängigen Ansprüchen angegeben.

Gemäß einer bevorzugten Ausgestaltung der Erfindung weist das Planetengetriebemodul eine Eingangswelle und/oder eine Ausgangswelle auf, die gegenüber einer umgebenden Stirnseite des Gehäuses mittels einer Wellendichtung abgedichtet ist bzw. sind. Von Vorteil ist dabei, dass eine einfache Schnittstelle zur Herstellung einer kraftübertragenden Verbindung zwischen den Modulen zur Verfügung steht.

Gemäß einer bevorzugten Ausgestaltung der Erfindung ist bzw. sind die Eingangswelle und/oder die Ausgangswelle in der umgebenden Stirnseite des Gehäuses gelagert. Von Vorteil ist dabei, dass die Funktion "Kraft abstützen" in jedem Planetengetriebemodul unabhängig von anderen Bauteilen des Planetengetriebes erfüllt wird.

Gemäß einer bevorzugten Ausgestaltung der Erfindung sind zwei benachbarte Planetengetriebemodule so aneinander montiert, dass eine Ausgangswelle eines ersten Planetengetriebemoduls mit einer Eingangswelle oder einer Wellenaufnahme eines zweiten Planetengetriebemoduls gekoppelt ist. Die Kopplung der beiden Wellen kann durch eine Kupplung erfolgen. Die Kopplung der Ausgangswelle mit der Wellenaufnahme kann dadurch erfolgen, dass die Ausgangswelle in die Wellenaufnahme eingeschoben wird, wobei die Ausgangswelle und die Wellenaufnahme eine Kurzverzahnung tragen können, die für eine drehfeste Verbindung sorgt. Von Vorteil ist dabei, dass eine einfache Schnittstelle zur Herstellung einer kraftübertragenden Verbindung zwischen den Modulen zur Verfügung steht.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: eine Prinzipskizze eines vormontierten, in sich geschlossenen und funktionsfähigen Planetengetriebemoduls;
- Fig. 2: drei Planetengetriebemodule; und
- Fig. 3: ein aus den drei in Fig. 2 dargestellten Planetengetriebemodulen gebildetes Planetengetriebe.

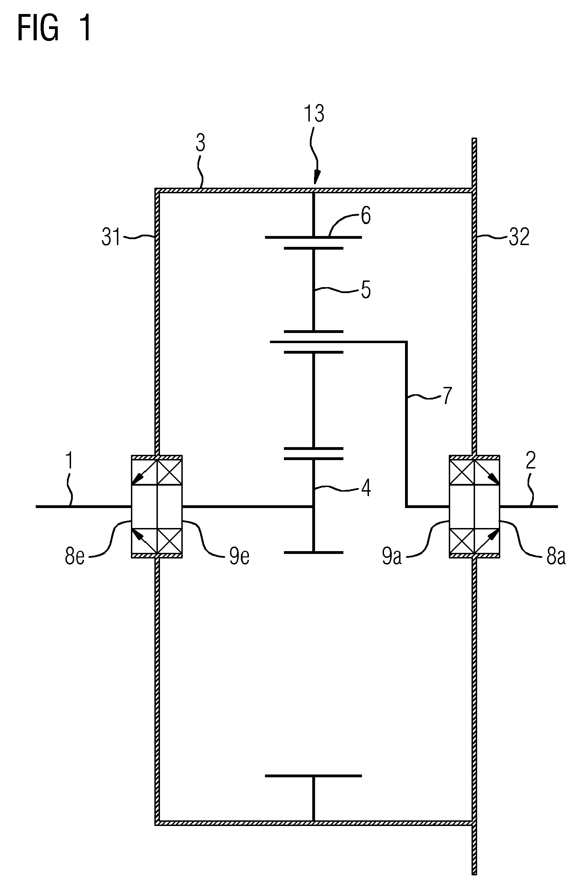

Fig. 1 zeigt eine Prinzipskizze eines vormontierten, in sich öldicht abgeschlossenen und für sich funktionsfähigen Planetengetriebemoduls 13. Es ist geeignet zum Einsatz als Getriebestufe in einem modular aufgebauten mehrstufigen Planetengetriebe. Das Modul 13 weist ein Gehäuse 3 auf, das vorzugsweise eine zylindrische Form hat. An der Innenseite der ringförmigen Wand des Gehäuses 3 ist ein Hohlrad 6 montiert. An einer ersten Stirnseite des Gehäuses 3 ist koaxial zu dem Hohlrad 6 eine Eingangswelle 1 mithilfe eines Lagers 9e gelagert und mithilfe einer Wellendichtung 8e gegenüber der umgebenden Stirnwand des Gehäuses 3 öldicht abgedichtet. Auf der Eingangswelle 1 ist ein Sonnenrad 4 montiert. Zwischen dem Hohlrad 6 und dem Sonnenrad 4 rotiert, mit beiden kämmend, mindestens ein Planetenrad 5, welches mittels einer Planetenachse in einem Planetenträger 7 gelagert ist. An einer zweiten, der ersten Stirnseite gegenüber liegenden Stirnseite des Gehäuses 3 ist koaxial zu dem Hohlrad 6 eine Ausgangswelle 2 mithilfe eines Lagers 9a gelagert und mithilfe einer Wellendichtung 8a gegenüber der umgebenden Stirnwand des Gehäuses 3 öldicht abgedichtet. Der Planetenträger ist drehfest mit der Ausgangswelle 2 verbunden.

In der von Planetengetriebestufen bekannten Funktionsweise führt eine Rotation der Eingangswelle 1 zu einer Rotation des Sonnenrads 4. Das mit dem rotierenden Sonnenrad 4 und dem feststehenden Hohlrad 6 kämmende Planetenrad 5 wird somit in eine einer Planetenbewegung ähnliche Kreisbewegung um die Achse der Eingangswelle 1 gezwungen, wobei das Planetenrad 5 um sich selbst rotiert. Diese Bewegung des Planetenrads 5 führt zu einer Drehung des Planetenträgers 7 um die Achse der Ausgangswelle 2. Durch die drehfeste Montage des Planetenträgers 7 auf der Ausgangswelle 2 führt diese Rotation des Planetenträgers 7 zu einer Drehung der Ausgangswelle 2.

Insgesamt ist das Innere des Planetengetriebemoduls 13 gegenüber der Umgebung öldicht abgedichtet.

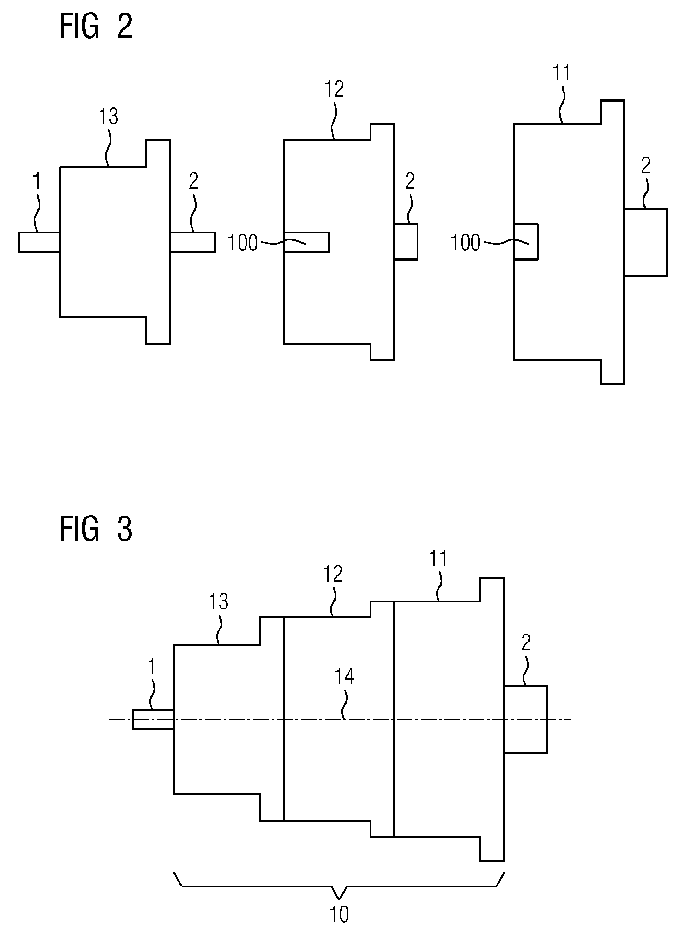

Fig. 2 zeigt drei erfindungsgemäße Planetengetriebemodule 11, 12 und 13. Die Planetengetriebemodule 11, 12 und 13 sind vormontiert, d.h. sie sind einsatzfertig und mit Getriebeöl befüllt. Das erste Planetengetriebemodul 11 weist eine Ausgangswelle 2 und eine Wellenaufnahme 100 auf. Das zweite Planetengetriebemodul 12 weist eine Ausgangswelle 2 und eine Wellenaufnahme 100 auf. Das dritte Planetengetriebemodul 13 weist eine Eingangswelle 1 und eine Ausgangswelle 2 auf. Dabei sind die Ausgangswelle 2 des dritten Planetengetriebemoduls 13 und die Wellenaufnahme 100 des zweiten Planetengetriebemoduls 12 so gestaltet, dass die Ausgangswelle 2 in die Wellenaufnahme 100 passt. Außerdem sind die Ausgangswelle 2 des zweiten Planetengetriebemoduls 12 und die Wellenaufnahme 100 des dritten Planetengetriebemoduls 11 so gestaltet, dass die Ausgangswelle 2 in die Wellenaufnahme 100 passt.

Fig. 3 zeigt ein aus den drei in Fig. 2 dargestellten Planetengetriebemodulen gebildetes Planetengetriebe 10. Das dritte Planetengetriebemodul 13 ist mit seiner abtriebsseitigen Stirnseite an der antriebsseitigen Stirnseite des zweiten Planetengetriebemoduls 12 montiert, wobei die Ausgangswelle 2 des dritten Planetengetriebemoduls 13 in die Wellenaufnahme 100 des zweiten Planetengetriebemoduls 12 eingeschoben wurde. Das zweite Planetengetriebemodul 12 ist mit seiner abtriebsseitigen Stirnseite an der antriebsseitigen Stirnseite des ersten Planetengetriebemoduls 11 montiert, wobei die Ausgangswelle 2 des zweiten Planetengetriebemoduls 12 in die Wellenaufnahme 100 des ersten Planetengetriebemoduls 11 eingeschoben wurde.

Die Montage des Planetengetriebes 10 erfolgt also durch Verbinden der einzelnen Planetengetriebemodule 11, 12, 13 zu einem Gesamtgetriebe. Dabei bildet das Modul 11 eine Planetenhauptstufe, während die Module 12 und 13 Getriebevorstufen bilden, welche mit der Planetenhauptstufe kombiniert werden können.

## Patentansprüche

1. Planetengetriebemodul (11, 12, 13) zum Einsatz als Getriebestufe in einem modular aufgebauten mehrstufigen Planetengetriebe (10),
aufweisend ein Gehäuse (3), in dem ein Hohlrad (6), ein Sonnenrad (4), ein Planetenträger (7) und mindestens ein in dem Planetenträger (7) drehbar gelagertes, mit dem Hohlrad (6) und dem Sonnenrad (4) kämmendes Planetenrad (5) angeordnet sind,
wobei das Planetengetriebemodul (11, 12, 13) öldicht abgedichtet ist.

2. Planetengetriebemodul (11, 12, 13) nach Anspruch 1, aufweisend eine Eingangswelle (1) und/oder eine Ausgangswelle (2), die gegenüber einer umgebenden Stirnseite (31, 32) des Gehäuses (3) mittels einer Wellendichtung (8e, 8a) abgedichtet ist bzw. sind.

3. Planetengetriebemodul (11, 12, 13) nach Anspruch 2, wobei die Eingangswelle (1) und/oder die Ausgangswelle (2) in der umgebenden Stirnseite (31, 32) des Gehäuses (3) gelagert (9e, 9a) ist bzw. sind.

4. Modular aufgebautes mehrstufiges Planetengetriebe (10), aufweisend zwei oder mehr Planetengetriebemodule (11, 12, 13) nach einem der Ansprüche 1 bis 3.

5. Modular aufgebautes mehrstufiges Planetengetriebe (10) nach Anspruch 4, wobei zwei benachbarte Planetengetriebemodule (11, 12, 13) so aneinander montiert sind, dass eine Ausgangswelle (2) eines ersten Planetengetriebemoduls (11, 12) mit einer Eingangswelle (1) oder einer Wellenaufnahme (100) eines zweiten Planetengetriebemoduls (12, 13) gekoppelt ist.
